# EUROPÄISCHE PATENTSCHRIFT

(11) **EP 1 752 036 B1**
(45) Veröffentlichungstag und Bekanntmachung des Hinweises auf die Patenterteilung: **23.07.2008**
(21) Anmeldenummer: 05017293.1
(22) Anmeldetag: 09.08.2005
(51) Int. Cl.: A01D 34/82

(54) **Handgeführtes Bodenbearbeitungsgerät, insbesondere Rasenmäher**
Handguided soil working device, in particular lawn mower
Dispositif guidé à la main pour le travail du sol, particulièrement tondeuse a gazon

(43) Veröffentlichungstag der Anmeldung: 14.02.2007
(73) Patentinhaber: OUTILS WOLF, 67165 Wissembourg Cedex (FR)
(72) Erfinder:
(74) Vertreter: Brommer, Hans Joachim

(56) Entgegenhaltungen:
- GB-A- 2 328 359
- US-A- 3 702 016
- US-A- 3 764 156
- US-A- 5 435 119
- US-A- 5 636 504

## Beschreibung

Die Erfindung betrifft ein handgeführtes Bodenbearbeitungsgerät, insbesondere Rasenmäher, das ein fahrbares Gehäuse mit einem schräg nach oben zur Bedienungsperson laufenden Führungsbügel aufweist, wobei der Führungsbügel verschwenkbar am Gehäuse gelagert und mittels eines Sperrhebels in unterschiedlichen Schwenkstellungen formschlüssig arretierbar ist, wobei die formschlüssige Arretierung mit elastischer Vorspannung arbeitet.

Die Erfindung wird nachfolgend am Beispiel eines Rasenmähers beschrieben, sie bezieht sich aber gleichwohl auch auf andere Bodenbearbeitungsgeräte, wie Vertikutierer, Bodenfräsen, Kehrmaschinen und dergleichen.

Bei derartigen Geräten besteht grundsätzlich das Bedürfnis, den Führungsbügel auf unterschiedliche Höhen einzustellen und zu arretieren, damit sein freies oberes Ende in einer ergonomisch günstigen Position zur Bedienungsperson steht.

Für diese Höhenverstellung gibt es bereits verschiedene Konstruktionen. Insbesondere ist bekannt, den Führungsbügel schwenkbar am Gehäuse des Bearbeitungsgerätes zu lagern und in der gewünschten Schwenkstellung formschlüssig zu arretieren.

Stattdessen ist es auch bekannt, den Führungsbügel etwa in halber Höhe durch ein Zwischengelenk zu teilen und dort die Höhenverstellung vorzunehmen.

Aus der US 3,764,156 ist eine Montagevorrichtung zum Anbringen eines Führungsbügels an einen Rasenmäher bekannt, bei der an den Enden des Führungsbügels und zwar an dessen Schwenklager ein Hebel eingehängt ist, der bei Druck auf sein inneres Ende die Enden des Führungsbügels nach innen verschiebt, so dass ein an den Führungsbügel vorgesehener Sperrstift außer Eingriff mit einer ortsfesten Halteklammer kommt. Dann kann der Führungshebel verschwenkt werden, wobei der Sperrstift aufgrund der Eigenelastizität des Führungsbügels automatisch wieder in eine andere Bohrung der Halteklammer einschnappt.

Hiervon ausgehend liegt der vorliegenden Erfindung die Aufgabe zu Grunde, eine Konstruktion für die Schwenklagerung des Führungsbügels zu finden, die ein besonders leichtes Verstellen und Arretieren in der gewünschten Höhenposition gestattet und die andererseits das Umschwenken des Führungsbügels nach oben über das Gehäuse hinweg in eine äußerst kompakte und platzsparende Geometrie erlaubt, für den Fall, dass das Bodenbearbeitungsgerät transportiert oder eingelagert werden soll. Nicht zu letzt soll sich die Erfindung durch einen stabilen, zuverlässigen Aufbau und kostengünstige Herstellung auszeichnen.

Diese Aufgabe wird erfindungsgemäß dadurch gelöst, dass die elastische Vorspannung derart ausgelegt ist, dass der Führungsbügel oder ein mit ihm zusammenwirkendes Gehäuseteil selbsttätig aus der formschlüssigen Arretierung herausspringt, wenn der Sperrhebel aus seiner Arretierstellung in seine Freigabestellung verstellt wird.

Dadurch ergibt sich der Vorteil, dass die Bedienungsperson nur noch den Sperrhebel aus der Arretierstellung in die Freigabestellung zu verstellen braucht und nicht noch den Führungsbügel manuell aus der formschlüssigen Arretierung herausziehen muss, um den Führungsbügel in die ergonomisch günstigste Position zu verstellen. Es genügt vielmehr, nur den Sperrhebel in die Freigabestellung zu verschwenken, anschließend den Führungsbügel in die gewünschte Höhenposition zu verstellen und danach den Sperrhebel wieder in die Arretierstellung zu verschwenken. Die Höhenverstellung des Führungsbügels wird dadurch erheblich erleichtert.

Grundsätzlich gibt es für die Ausbildung des Sperrhebels verschiedene Möglichkeiten. Im Sinne seiner einfachen Bedienbarkeit empfiehlt es sich, dass er ohne Werkzeug, also rein manuell oder mit dem Fuß, betätigt werden kann.

Damit der Sperrhebel beim Verschwenken in seine Arretierstellung automatisch die formschlüssige Arretierung des Führungsbügels bewirkt, empfiehlt es sich, dass er zumindest eine schräge Gleitfläche aufweist, die den Führungsbügel entgegen seiner Vorspannung in die formschlüssige Arretierung hineindrückt.

Besonders günstig ist es hierbei, wenn die genannte schräge Gleitfläche an einer U-förmigen Klammer angeordnet ist, die sowohl den Führungsbügel in seinem die Arretierelemente tragenden Bereich als auch die Gegenelemente, die mit diesen Arretierelementen in Eingriff kommen, umgreift, wenn der Sperrhebel in seiner Arretierstellung steht. Dadurch kann sich die schräge Gleitfläche an den dort festen Gegenelementen abstützen, wenn sie der Vorspannung des Führungsbügels ausgesetzt wird.

Alternativ ließe sich ein Gerät realisieren, das jedoch nicht unter den Wortlaut der Ansprüche fällt, worin die formschlüssige Arretierung mit einer elastischen Vorspannung derart arbeitet, dass der Führungsbügel oder ein zur formschlüssigen Arretierung mit ihm zusammenwirkendes Gehäuseteil nicht aus der formschlüssigen Arretierung herausspringt , sondern in diese hineinspringt. Der Sperrhebel kann dabei unterschiedliche Funktionen ausüben: zweckmäßig hält er den Führungsbügel oder das zur formschlüssigen Arretierung mit ihm zusammenwirkende Gehäuseteil in der formschlüssigen Arretierung fest, wenn er in die Arretierstellung verstellt wird, damit starke Erschütterungen nicht ein ungewolltes Herausspringen aus der formschlüssigen Arretierung auslösen. Darüber hinaus kann der Sperrhebel auch dazu verwendet werden, den Führungsbügel oder das mit ihm zusammenwirkende Gehäuseteil aus der formschlüssigen Arretierung herauszudrücken. Besonders zweckmäßig ist es aber, wenn die formschlüssige Arretierung nach Art einer Rast- oder Schnappverbindung ausgebildet ist, die es dem Benutzer gestattet, allein durch Herunterdrücken oder Hochheben des Führungsbügels die formschlüssige Arretierung aufzuheben, um die Höhe des Führungsbügels zu verstellen; in diesem Fall braucht der Sperrhebel nur die formschlüssige Arretierung zu sichern, um das oben erwähnte ungewollte Herausspringen zu verhindern.

Auch bei der Alternative kann der Sperrhebel zumindest eine schräge Gleitfläche aufweisen; wobei diese Gleitfläche jetzt den Führungsbügel oder das zur formschlüssigen Arretierung mit ihm zusammenwirkende Gehäuseteil entgegen der Vorspannung aus der formschlüssigen Arretierung herausdrückt und/oder in der formschlüssigen Arretierung sichert.

Außerdem kann der Sperrhebel ähnlich wie bei bei Ausgestaltungen der erfindungsgemäßen Lösung eine weitere Gleitfläche aufweisen, die den Führungsbügel und das mit ihm zur formschlüssigen Arretierung zusammenwirkende Gehäuseteil in formschlüssigem Eingriff hält, damit die Arretierung nicht ungewollt durch äußere ,Erschütterungen oder dergleichen aufgehoben wird.

In jedem Fall empfiehlt es sich, dass der Sperrhebel in seiner Arretierstellung in einer Art Rastverbindung gehalten wird, so dass er sich nicht durch äußere Erschütterungen lösen kann.

Für die konstruktive Ausbildung des Führungsbügels bieten sich dem Fachmann zahlreiche Möglichkeiten. Meist hat er in bekannter Weise zwei schwenkbar am Gehäuse gelagerte Schenkel; diese Schenkel werden erfindungsgemäß in Querrichtung vorgespannt und in dieser Querrichtung sind die den Formschluss bewirkenden Arretierelemente wirksam.

Eine besonders zweckmäßige Weiterbildung der Erfindung besteht darin, die Schwenklager des Führungsbügels gegenüber seinem unteren Ende nach hinten zu versetzen, so dass die unteren Enden des Führungsbügels Überstände bilden und dass an diesen Überständen Arretierelemente zur Erzeugung des Formschlusses angeordnet sind. Dieser Versatz der Schwenklagerung nach hinten ermöglicht es, dass das freie Ende des Führungsbügels in über das Gehäuse geklappter inaktiver Stellung nahezu mit dem vorderen Ende des Bodenbearbeitungsgerätes fluchtet. Das Gerät nimmt daher beim Transport oder bei der Lagerung nur sehr geringen Platzbedarf in Anspruch. Gleichzeitig ergibt sich der technische Vorteil, dass die überstehenden Enden des Führungsbügels nicht mehr zur Steuerung des Bodenbearbeitungsgerätes benötigt werden, sondern gezielt auf die Erzeugung der erfindungsgemäßen Vorspannung ausgelegt werden können. ,

Die Lagerung des Sperrhebels kann am Führungsbügel, zweckmäßig aber am Gehäuse des Bodenbearbeitungsgerätes angeordnet sein. Insbesondere bietet sich die Möglichkeit, den Sperrhebel und den Führungsbügel an der gleichen Schwenkachse am Bearbeitungsgerät zu lagern.

Für die konstruktive Realisierung des Formschlusses zwischen Führungsbügel und Gehäuse des Bearbeitungsgerätes bieten sich die bekannten Möglichkeiten, insbesondere in Form zweier miteinander korrespondierender Zahnflächen oder durch eine Lochreihe, die mit einem entsprechenden Vorsprung korrespondiert.

Der Hauptanwendungsfall des beschriebenen Bodenbearbeitungsgerätes ist der Rasenmäher. Dabei befindet sich üblicherweise in Fahrtrichtung hinter dem Gehäuse ein Sammelbehälter für das Schnittgut. Zur bequemeren Abnahme dieses Sammelbehälters empfiehlt es sich, dass der Führungsbügel in einer hochgeschwenkten Position am Gehäuse verrastbar ist. Dadurch kann er nicht unkontrolliert nach vorne oder hinten herunterschwenken.

Nicht zuletzt ist es zweckmäßig, den Führungsbügel durch einen Anschlag gegen ein Herunterfallen zu sichern, wobei hier in erster Linie an die Sicherung gegen ein Herunterfallen nach Hinten gedacht ist.

Weitere Merkmale und Vorteile der Erfindung ergeben sich aus der nachfolgenden Beschreibung eines Ausführungsbeispieles und aus der Zeichnung selbst; dabei zeigt
Figur 1 ein Schrägbild des erfindungsgemäßen Rasenmähers mit dem Führungsbügel in formschlüssiger Arretierung;
Figur 2 ein ähnliches Schrägbild mit aus der formschlüssigen Arretierung gelösten, frei schwenkbaren Führungsbügel;
Figur 3 eine Seitenansicht des Rasenmähers gemäß Figur 2;
Figur 4 eine vergrößerte Ansicht von oben auf die Schwenklagerung und die formschlüssige Arretierung;
Figur 5 einen Schnitt längs der Linie V-V in Figur 4;
Figur 6 Eine Schrägansicht des Rasenmähers mit über das Gehäuse geklappten Führungsbügeln.

Wie die Zeichnungen zeigen, besteht der Rasenmäher aus einem etwa torusförmigem Gehäuse 1 mit zwei Vorderrädern 2 und zwei Hinterrädern 3. Nach hinten öffnet sich das Gehäuse 1 zu einem abnehmbaren Fangbehälter 4 für das Schnittgut. Die Bedienung und Steuerung des Rasenmähers erfolgt über einen Führungsbügel 5, der durch Neigungsverstellung an die Größe der Bendienungsperson angepasst werden kann.

Der Antrieb zumindest des unter dem Gehäuse 1 rotierenden Schneidmessers - gegebenenfalls auch der Fahrantrieb des Rasenmähers - erfolgt über einen Antriebsmotor, der an der Oberseite des Gehäuses 1 montiert ist, der aber aus Übersichtlichkeitsgründen nicht dargestellt ist. Insoweit hat der Rasenmäher den bekannten Aufbau.

Wesentlich ist nun die Schwenklagerung und die formschlüssige Arretierung des unteren Endes des Führungsbügels 5 am hinteren Bereich des Gehäuses 1.

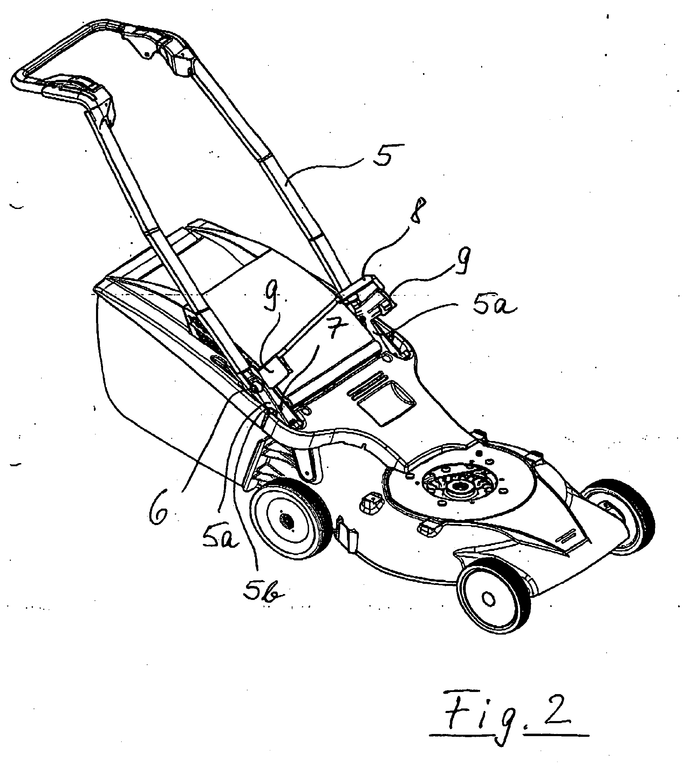

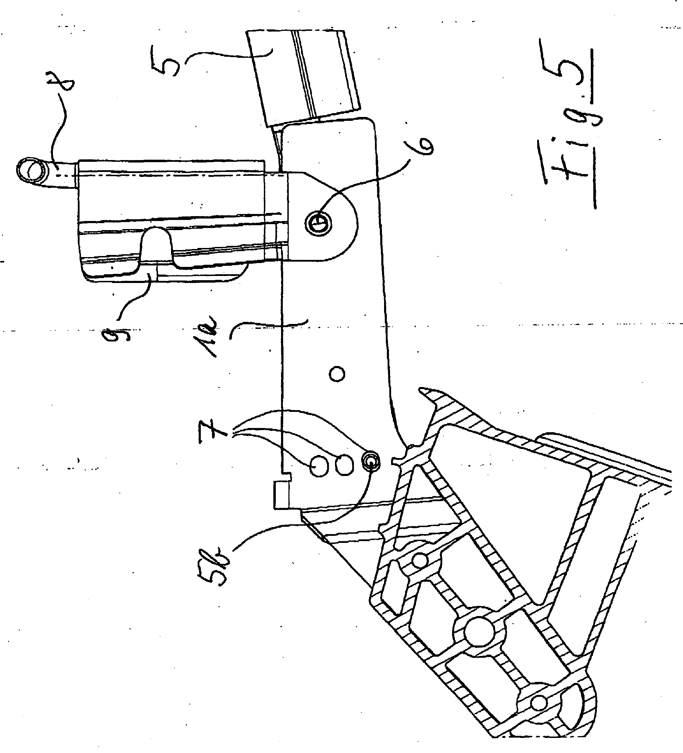

Man sieht insbesondere in Figur 2, dass der Führungsbügel 5 mit seinem linken und rechten Schenkel jeweils um eine horizontale Schwenkachse 6 am Gehäuse 1 gelagert ist. Ausgehend von dieser Schwenkachse haben beide Schenkel des Führungsbügels 5 nach vorne laufende Überstände 5a. Diese Überstände tragen einen horizontal nach innen gerichteten Querbolzen 5b, der wahlweise mit einer der gehäusefesten Öffnungen 7 in Eingriff gebracht werden kann, vergleiche Figur 5. Die Öffnungen 7 sind in Haltestreben 1 a angeordnet, die am Gehäuse 1 montiert sind und sich etwa in einer Parallelebene zu den Überständen 5a nach hinten erstrecken. Sie tragen auch die Schwenklagerung 6 für den Führungsbügel.

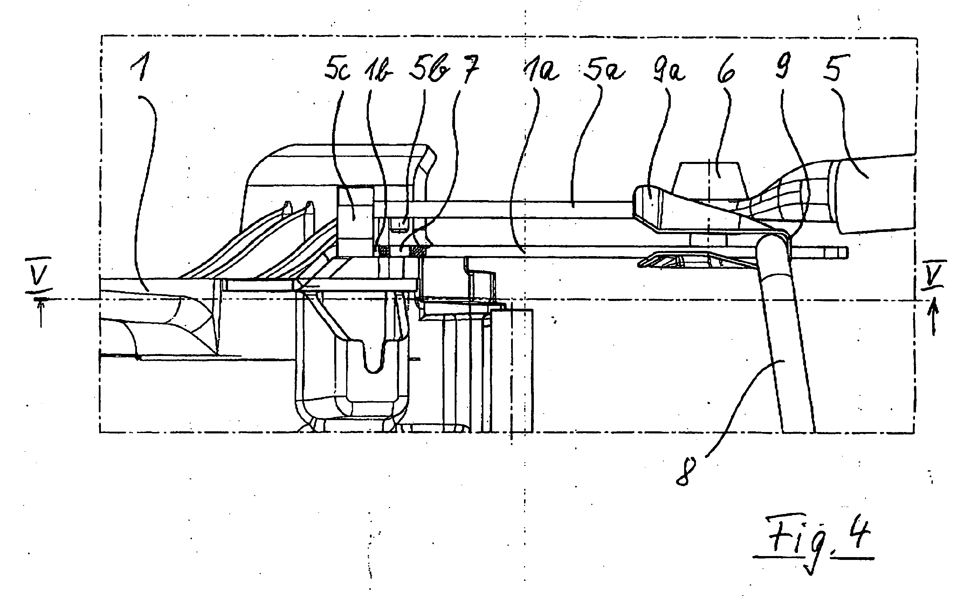

Die genannten Überstände 5a mit ihren Vorsprüngen 5b sind so am Führungsbügel 5 angeformt, dass sie unter einer gewissen Vorspannung quer zur Fahrtrichtung des Rasenmähers stehen, und zwar in der Art, dass sie aus den Bohrungen 7 herausrutschen möchten. Man sieht dies deutlich in Figur 2 und 4.

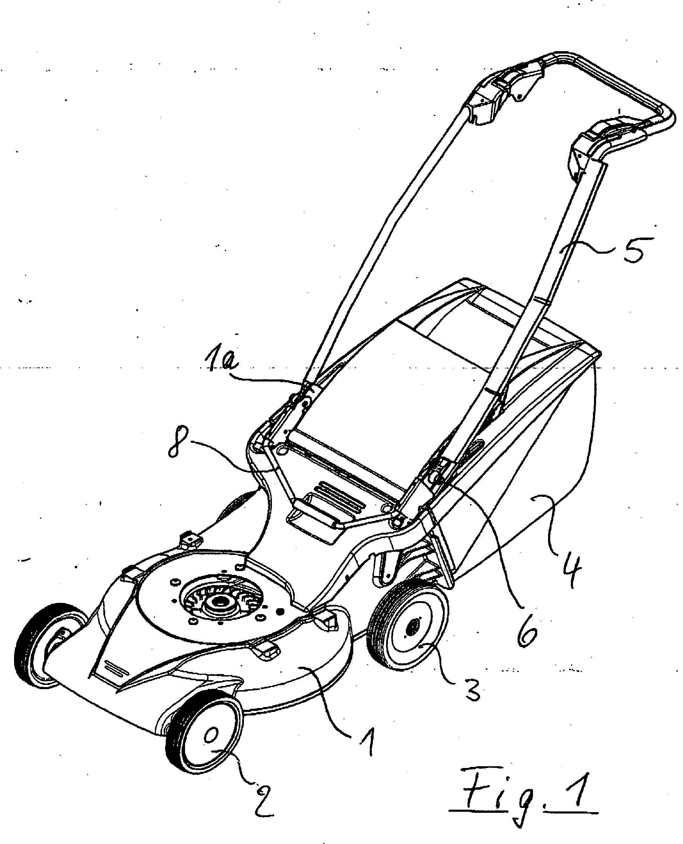

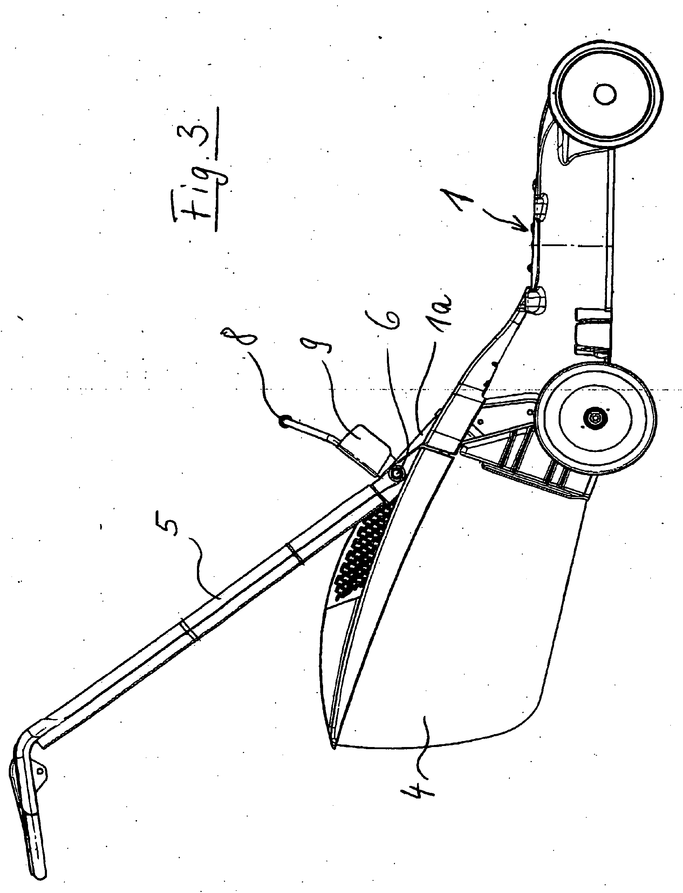

Damit nun die Vorsprünge 5b in Eingriff mit den Bohrungen 7 gebracht und gehalten werden, wird ein Sperrhebel 8 aus der in Figur 2 bis 5 gezeigten Freigabestellung nach unten auf das Gehäuse 1 geschwenkt, nämlich in seine Arretierstellung, die man in Figur 1 erkennt.

Dieser Sperrhebel trägt passend zur Lage der Überstände 5a des Führungsbügels 5 Klammern 9, die nach unten offen sind. Diese Klammern haben innenseitig zumindest eine schräge Gleitfläche 9a, die so ausgebildet ist, dass die Klammern 9 beim Herunterschwenken des Sperrhebels 8 einerseits mit den Überständen 5a, andererseits mit dem die Bohrungen 7 tragenden Gehäuseteil 1a in Anlage kommen, und diese beiden Teile in Querrichtung zusammendrücken. Dadurch dringen die Vorsprünge 5b in jeweils eine der Bohrungen 7 ein und sie werden durch die Klammern 9 in dieser formschlüssigen Arretierung gehalten.

Die genannte schräge Gleitfläche 9a der Klammer 9 ist in Figur 4 gut erkennbar. Der Sperrhebel 8 befindet sich dort in der oberen Freigabestellung und man erkennt, dass die schräge Gleitfläche 9a beim Herunterschwenken des Sperrhebels den Überstand 5a des Führungsbügels entgegen seiner Vorspannung in Querrichtung auf die ortsfeste Haltestrebe 1a (in Figur 4 nach unten) drückt und dadurch den Vorsprung 5b in der Bohrung 7 versenkt. Hat der Sperrhebel 8 seine untere Arretierstellung erreicht, so liegt der Überstand 5a flächig an der Haltestrebe 1a an - gegebenenfalls unter Zwischenlage eines elastischen Dämpfungselementes, um die Übertragung der Motorvibrationen auf den Führungsbügel 5 zu dämpfen.

Gleichzeitig verdeutlicht Figur 4, dass beim Hochschwenken des Sperrhebels 8 in die Freigabestellung der Überstand 5a des Führungsbügels selbsttätig aus seiner formschlüssigen Arretierung herausspringt und der Benutzer somit ohne Verwendung eines Werkzeuges die gewünschte Höhenanpassung des Führungsbügels vornehmen kann und nach Erreichen der Wunschposition lediglich wieder den Sperrhebel 8 nach unten in die Arretierstellung zu verschwenken braucht.

Damit der Vorsprung 5b leichter in die Bohrung 7 eintreten kann, kann die Bohrung und /oder der Vorsprung im Einlaufbereich konisch ausgebildet sein. Außerdem wird dadurch eine spielfreie Führung des Vorsprunges in der Bohrung begünstigt.

Selbstverständlich kommen für die konstruktive Realisierung der formschlüssigen Arretierung des Führungsbügels am Gehäuse auch andere Möglichkeiten in Betracht. Insbesondere könnten an Stelle des Vorsprunges 5b und der Bohrung 7 einander zugewandte Zahnleisten am Gehäuseteil 1a und dem Überstand 5a angeordnet sein.

Des Weiteren zeigt Figur 4, dass der Führungsbügel - im Ausführungsbeispiel über seine Überstände 5a beidseits Anschläge 5c trägt, die in Querrichtung vorstehen und in Schlitze 1 b am Gehäuse 1 oder der Haltestrebe 1 a hineinragen. Die Schlitze 1 b sind in Schwenkrichtung nach oben geschlossen, damit der Führungsbügel 5 beim Lösen seiner formschlüssigen Arretierung - also bei der in Figur 4 gezeigten Situation - nicht vollständig nach unten fallen kann, sondern in einer Position gehalten wird, die nur wenig unterhalb der tiefsten Einstellmöglichkeit des Führungsbügels liegt. Hingegen sind die Schlitze 1 b nach unten offen, damit der Führungsbügel 5 nach oben und über den Motor hinweg nach vorn geklappt werden kann.

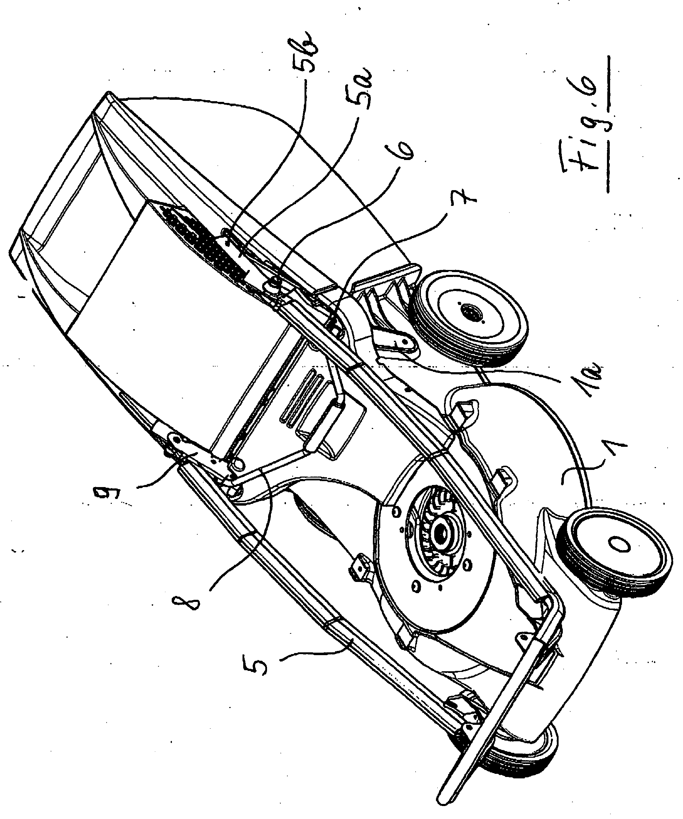

Aus Figur 6 wird noch ein besonderer Vorteil der erfindungsgemäßen Lagerung des Führungsbügels deutlich. Der Führungsbügel ist dort um seine Schwenklagerung 6 herum über das Gehäuse 1 hinweg um nahezu 130° nach vorne heruntergeklappt, also in eine Position, die beim Transport oder beim Einlagern des Rasenmähers vorteilhaft ist. Man sieht, dass der Führungsbügel dabei etwa horizontal verläuft und nahezu bis auf das Gehäuse 1 heruntergeklappt werden kann, wobei er nur etwa so weit vorsteht wie die Vorderräder. Der Rasenmäher hat dadurch nur noch minimalen Platzbedarf. Ursächlich hierfür sind die am Gehäuse 1 angebrachten Haltestreben 1a, die es gestatten, die Schwenklager 6 des Führungsbügels 5 weiter als üblich nach hinten zu verlegen, insbesondere noch hinter die rückwärtige Gras-Auswurföffnung des Gehäuses 1. Der Sperrhebel 8 ist in dieser heruntergeklappten Stellung des Führungsbügels 5 funktionslos, weil die Überstände 5a des Führungsbügels dann nicht mehr mit dem Bereich der Haltestreben 1a fluchten, wo die Bohrungen 7 angebracht sind, sondern statt dessen nach hinten ragen.

Dadurch dass der Führungsbügel bis an den vorderen Rand des Rasenmähers heruntergeklappt werden kann, benötigt er auch kein Zwischengelenk, sondern kann einteilig von oben nach unten durchlaufen.

Zusammenfassend zeichnet sich die Erfindung also durch eine äußerst leichte Verstellung des Führungsbügels 5 auf unterschiedliche Höhen und durch sehr kompakten Aufbau bei heruntergeklapptem Führungsbügel aus.

## Patentansprüche

1. Handgeführtes Bodenbearbeitungsgerät, insbesondere Rasenmäher, das ein fahrbares Gehäuse (1) mit einem schräg nach oben zur Bedienungsperson laufenden Führungsbügel (5) aufweist, wobei der Führungsbügel (5) verschwenkbar am Gehäuse (1) gelagert und mittels eines Sperrhebels (8) in unterschiedlichen Schwenkstellungen formschlüssig arretierbar ist, wobei die formschlüssige Arretierung mit elastischer Verspannung arbeitet,
**dadurch gekennzeichnet,**
**dass** die elastische Vorspannung derart ausgelegt ist, dass der Führungsbügel (5) oder ein zur formschlüssigen Arretierung mit ihm zusammenwirkendes Gehäuseteil (1a) aus der formschlüssigen Arretierung herausspringt, wenn der Sperrhebel (8) aus seiner Arretierstellung in seine Freigabestellung verstellt wird.

2. Bodenbearbeitungsgerät nach Anspruch 1,
**dadurch gekennzeichnet,**
**dass** der Sperrhebel (8) ein manuell bedienbarer Hebel, insbesondere Schwenkhebel, ist.

3. Bodenbearbeitungsgerät nach Anspruch 1,
**dadurch gekennzeichnet,**
**dass** der Sperrhebel (8) zumindest eine schräge Gleitfläche (9a) aufweist, die den Führungsbügel (5) oder das zur formschlüssigen Arretierung mit ihm zusammenwirkende Gehäuseteil (1a) entgegen der Vorspannung in die formschlüssige Arretierung drückt.

4. Bodenbearbeitungsgerät nach Anspruch 1,
**dadurch gekennzeichnet,**
**dass** die schräge Gleitfläche (9a) an einer Klammer (9) angeordnet ist, die sowohl den Führungsbügel (5) in seinem ein Arretierelement (5b) tragenden Bereich (5a) als auch ein mit diesem Arretierelement (5b) in Eingriff kommendes Gegenelement (1a) umgreift, wenn der Sperrhebel (8) in seiner Arretierstellung steht.

5. Bodenbearbeitungsgerät nach Anspruch 1,
**dadurch gekennzeichnet,**
**dass** der Sperrhebel (8) in seiner Arretierstellung verrastet.

6. Bodenbearbeitungsgerät nach Anspruch 1,
**dadurch gekennzeichnet,**
**dass** der Führungsbügel (5) in bekannter Weise zwei schwenkbar am Gehäuse gelagerte Schenkel aufweist, dass diese Schenkel in Querrichtung vorgespannt sind und der Formschluss durch in Querrichtung wirksame Arretierelemente (5b, 7) erzeugt wird.

7. Bodenbearbeitungsgerät nach Anspruch 1,
**dadurch gekennzeichnet,**
**dass** die Schwenklager (6) des Führungsbügels (5) am Gehäuse gegenüber dem unteren Ende des Führungsbügels nach hinten versetzt sind, so dass der Führungsbügel (5) nach vorne Überstände (5a) bildet und
**dass** an diesen Überständen (5a) Arretierelemente (5b) zur Erzeugung des Formschlusses angeordnet sind.

8. Bodenbearbeitungsgerät nach Anspruch 1,
**dadurch gekennzeichnet,**
**dass** die formschlüssige Arretierung durch korrespondierende Zahnleisten oder durch Vorsprünge (5b) und korrespondierende Bohrungen (7) erzeugt wird.

9. Bodenbearbeitungsgerät nach Anspruch 1,
**dadurch gekennzeichnet,**
**dass** der Führungsbügel (5) ohne zusätzliches Gelenk von seinem Schwenklager (6) am Gehäuse (1) bis zu seinem oberen freien Ende ausgebildet ist.

10. Bodenbearbeitungsgerät nach Anspruch 1,
**dadurch gekennzeichnet,**
**dass** die Lagerung des Sperrhebels (8) am Gehäuse (1) angeordnet ist.

11. Bodenbearbeitungsgerät nach Anspruch 1,
**dadurch gekennzeichnet,**
**dass** der Sperrhebel (8) und der Führungsbügel (5) an der gleichen Achse (6) gelagert sind.

12. Bodenbearbeitungsgerät nach Anspruch 1,
**dadurch gekennzeichnet,**
**dass** die Lagerung (6) des Führungsbügels (5) am Gehäuse (1) so positioniert ist, dass das freie Ende des Führungsbügels in nach vorne und unten übergeklappter inaktiver Stellung nahezu mit dem vorderen Ende des Bodenbearbeitungsgerätes fluchtet.

13. Bodenbearbeitungsgerät nach Anspruch 1,
**dadurch gekennzeichnet,**
**dass** der Führungsbügel (5) in einer hochgeschwenkten Position am Gehäuse verrastbar ist.

14. Bodenbearbeitungsgerät nach Anspruch 1,
**dadurch gekennzeichnet,**
**dass** der Führungsbügel (5) durch einen Anschlag (5c) gegen ein Herunterfallen gesichert ist.

## Claims

1. Hand-guided soil cultivation device, in particular a lawnmower, which has a mobile housing (1) with a guiding handle (5) which extends obliquely upwards towards the operator, wherein the guiding handle (5) is pivotably mounted on the housing (1) and is positively lockable by means of a locking lever (8) in different pivoted positions, the positive locking co-operating with resilient pretension, **characterised in that** the resilient pretension is designed in such a way that the guiding handle (5) or a housing part (1a) which co-operates therewith for positive locking jumps out of the positive lock when the locking lever (8) is moved out of its locking position into its releasing position.

2. Soil cultivation device as claimed in Claim 1, **characterised in that** the locking lever (8) is a manually operated lever, in particular a pivot lever.

3. Soil cultivation device as claimed in Claim 1, **characterised in that** the locking lever (8) has at least one oblique sliding surface (9a) by which the guiding handle (5) or the housing part (1a) which co-operates therewith for positive locking is pressed into the positive lock against the pretension.

4. Soil cultivation device as claimed in Claim 1, **characterised in that** the oblique sliding surface (9a) is disposed on a clip (9) which engages around not only the guiding handle (5) in its region (5a) bearing a locking element (5b) but also around a matching element (1a) which comes into engagement with this locking element (5b) when the locking lever (8) is in its locking position.

5. Soil cultivation device as claimed in Claim 1, **characterised in that** the locking lever (8) is latched in its locking position.

6. Soil cultivation device as claimed in Claim 1, **characterised in that** in a known manner the guiding handle (5) has two arms pivotably mounted on the housing, that these arms are pretensioned in the transverse direction and the positive locking is produced by locking elements (5b, 7) which act in the transverse direction.

7. Soil cultivation device as claimed in Claim 1, **characterised in that** on the housing the pivot bearings (6) of the guiding handle (5) are offset towards the rear relative to the lower end of the guiding handle, so that the guiding handle (5) forms projecting lengths (5a) towards the front and that locking elements (5b) for producing the positive locking are disposed on these projecting lengths (5a).

8. Soil cultivation device as claimed in Claim 1, **characterised in that** the positive locking is produced by corresponding toothed strips or by projections (5b) and corresponding bores (7).

9. Soil cultivation device as claimed in Claim 1, **characterised in that** the guiding handle (5) is constructed without an additional joint from its pivot mounting (6) on the housing(19) to its upper free end.

10. Soil cultivation device as claimed in Claim 1, **characterised in that** the mounting of the locking lever (8) is disposed on the housing (1).

11. Soil cultivation device as claimed in Claim 1, **characterised in that** the locking lever (8) and the guiding handle (5) are mounted on the same shaft (6).

12. Soil cultivation device as claimed in Claim 1, **characterised in that** in the inactive position of the guiding handle (5) in which it is bent over forwards and downwards the mounting (6) of the guiding handle (5) on the housing (1) is positioned so that the free end of the guiding handle is nearly aligned with the front end of the soil cultivation device.

13. Soil cultivation device as claimed in Claim 1, **characterised in that** the guiding handle (5) can be latched in a pivoted-up position on the housing.

14. Soil cultivation device as claimed in Claim 1, **characterised in that** the guiding handle (5) is secured against falling down by a stop (5c).

## Revendications

1. Dispositif guidé à la main pour le travail du sol, notamment tondeuse à gazon, qui présente un carter mobile (1) muni d'un guidon (5) s'étendant en biais vers le haut en direction de l'opérateur, le guidon (5) étant monté de façon pivotante sur le carter (1) et pouvant être bloqué par engagement positif dans différentes positions de pivotement au moyen d'un levier d'arrêt (8), le blocage par engagement positif fonctionnant avec une précontrainte élastique, **caractérisé en ce que** la précontrainte élastique est conçue de telle sorte que le guidon (5) ou une partie du carter (1a) coopérant avec ce dernier pour réaliser le blocage par engagement positif, est éjecté(e) de la position de blocage par engagement positif lorsque le levier d'arrêt (8) passe de sa position de blocage à sa position de libération.

2. Dispositif pour le travail du sol selon la revendication 1, **caractérisé en ce que** le levier d'arrêt (8) est un levier actionnable manuellement, notamment un levier pivotant.

3. Dispositif pour le travail du sol selon la revendication 1, **caractérisé en ce que** le levier d'arrêt (8) présente au moins une surface de glissement oblique (9a) qui pousse le guidon (5) ou la partie du carter (1a) coopérant avec lui pour réaliser le blocage par engagement positif, en position de blocage par engagement positif en vainquant la précontrainte.

4. Dispositif pour le travail du sol selon la revendication 1, **caractérisé en ce que** la surface de glissement oblique (9a) est placée sur une bride de fixation (9) qui entoure à la fois le guidon (5) dans sa zone (5a) portant un élément de blocage (5b) et un élément complémentaire (1a) se mettant en prise avec cet élément de blocage (5b) lorsque le levier d'arrêt (8) se trouve en position de blocage.

5. Dispositif pour le travail du sol selon la revendication 1, **caractérisé en ce qu'**en position de blocage, le levier d'arrêt (8) est enclenché.

6. Dispositif pour le travail du sol selon la revendication 1, **caractérisé en ce que** le guidon (5) présente de façon connue deux branches montées de façon pivotante sur le carter, **en ce que** ces branches sont précontraintes dans la direction transversale et **en ce que** l'engagement positif est produit par des éléments de blocage (5b, 7) agissant dans la direction transversale.

7. Dispositif pour le travail du sol selon la revendication 1, **caractérisé en ce que** les paliers de pivotement (6) du guidon (5) sur le carter sont décalés vers l'arrière par rapport à l'extrémité inférieure du guidon, si bien que le guidon (5) présente des extrémités en porte-à-faux (5a) vers l'avant et que des éléments de blocage (5b) destinés à créer l'engagement positif sont disposés sur ces extrémités en porte-à-faux (5a).

8. Dispositif pour le travail du sol selon la revendication 1, **caractérisé en ce que** le blocage par engagement positif est créé par des barrettes dentées correspondantes ou par des saillies (5b) et des perçages correspondants (7).

9. Dispositif pour le travail du sol selon la revendication 1, **caractérisé en ce que** le guidon (5) est réalisé sans articulation supplémentaire depuis son palier de pivotement (6) sur le carter (1) jusqu'à son extrémité libre supérieure..

10. Dispositif pour le travail du sol selon la revendication 1, **caractérisé en ce que** le palier du levier d'arrêt (8) est disposé sur le carter (1).

11. Dispositif pour le travail du sol selon la revendication 1, **caractérisé en ce que** le levier d'arrêt (8) et le guidon (5) sont montés sur le même axe (6).

12. Dispositif pour le travail du sol selon la revendication 1, **caractérisé en ce que** le palier (6) du guidon (5) sur le carter (1) est positionné de telle sorte que l'extrémité libre du guidon est pratiquement en alignement avec l'extrémité avant du dispositif pour le travail du sol lorsqu'elle est rabattue vers l'avant et vers le bas en position inactive.

13. Dispositif pour le travail du sol selon la revendication 1, **caractérisé en ce que** dans une position pivotée vers le haut, le guidon (5) peut être enclenché sur le carter.

14. Dispositif pour le travail du sol selon la revendication 1, **caractérisé en ce que** le guidon (5) est assuré par une butée (5c) pour l'empêcher de tomber.
